(19) Europäisches Patentamt
European Patent Office
Office européen des brevets

(11) **EP 0 873 924 A1**

(12) **EUROPÄISCHE PATENTANMELDUNG**

(43) Veröffentlichungstag:
28.10.1998 Patentblatt 1998/44

(51) Int. Cl.$^6$: **B60T 10/02**

(21) Anmeldenummer: 98106440.5

(22) Anmeldetag: 08.04.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 23.04.1997 DE 19716923

(71) Anmelder:
Voith Turbo GmbH & Co. KG
89522 Heidenheim (DE)

(72) Erfinder:
• Scherer, Roland
74564 Crailsheim (DE)
• Friedrich, Jürgen
74564 Crailsheim (DE)
• Daum, Matthias
74564 Crailsheim (DE)
• Lechler, Ralf
74595 Langenburg (DE)

(74) Vertreter: Dr. Weitzel & Partner
Friedenstrasse 10
89522 Heidenheim (DE)

(54) **Verfahren und Vorrichtung zur Begrenzung der maximal ausnutzbaren Bremswirkung eines Sekundärretarders**

(57) Die Erfindung betrifft ein Verfahren zur Begrenzung der maximal ausnutzbaren Bremswirkung eines Sekundärretarders, bei dem die während des Bremsens erzeugte Wärme mit Hilfe eines Kühlmediums eines Kühlsystems abgeführt wird.

Das Verfahren ist dadurch gekennzeichnet, daß zum Schutz des Kühlsystems vor Überhitzung bei gleichzeitiger maximaler Ausnutzung der Kühlleistung des Kühlsystems zur Begrenzung der Bremsleistung oder des Bremsmomentes des Sekundärretarders mindestens eine der nachfolgenden Größen bestimmt wird:

der Kupplungszustand des Getriebes;
die Leergangstellung des Getriebes.

Fig.1

EP 0 873 924 A1

**Beschreibung**

Die Erfindung betrifft ein Verfahren und ein Steuer-/Regelsystem zur Begrenzung der Bremswirkung eines Sekundärretarders, bei dem die während des Bremsens erzeugte Wärme mit Hilfe eines Kühlmediums eines Kühlsystems abgeführt wird. Sekundärretarder sind Retarder die im Antriebsstrang des Fahrzeuges getriebeabtriebsseitig angeordnet sind, und bei denen die Retarderdrehzahl der Abtriebsdrehzahl des Getriebes proportional ist. Derartige Retarder sind beispielsweise in "Der ZF-Intarder von M. Schwab, W. Härdtle, K.F. Heinzelmann, ATZ Automobiltechnische Zeitschrift 95 (1993) S. 250-255" offenbart.

Eine Begrenzung der Bremswirkung eines Retarders wird im vorliegenden Fall insbesondere deswegen angestrebt, um eine Überhitzung des Kühlmediums, mit dem die während des Bremsens vom Retarder erzeugte Wärme abgeführt wird, zu verhindern. Hierzu ist eine Vielzahl von komplizierten Regelungen und Verfahren bekanntgeworden.

So beschreibt beispielsweise die PCT/SE 93/00478 ein Verfahren und eine Regelung für einen Retarder, bei dem die vom Retarder erzeugte Wärme mit Hilfe des Motorkühlmediums abgeführt wird, und bei dem die Bremswirkung in Abhängigkeit von mindestens der Drehzahl des Antriebsmotors begrenzt wird.

Eine andere Möglichkeit, eine Überhitzung des Kühlsystems zu vermeiden, besteht darin, eine Regelung vorzusehen, bei der die Temperatur des Kühlmediums als Regelgröße dient. Derartige Regelungen bzw. Steuerungen sind ebenfalls in der oben genannten PCT/SE93/00478 oder auch "Der ZF-Intarder von M. Schwab, W. Härdtle, K.F. Heinzelmann, ATZ Autobmobiltechnische Zeitschrift 95 (1993) S. 250-255" offenbart.

Zum Schutz anderer Fahrzeugkomponenten ist eine Reduzierung des Bremsmomentes eines Retarders bereits bekannt geworden. So zeigt die DE 33 21 948 ein Primärbremssystem mit einer Strömungsbremse, bei der während des Herunterschaltens das Bremsmoment reduziert wird, um das System vor Schaltstößen zu schützen.

Die DE 26 52 650 betrifft ein Automatgetriebe mit einem hydrodynamischen Primärretarder. Eine Bremsmomentenreduzierung wird dort lediglich zum Schutz der Servo-Glieder vor zusätzlichem Verschleiß durch das Retarderbremsmoment auf diese Bauteile vorgenommen.

Aufgabe der Erfindung ist es, ein Verfahren und eine Vorrichtung anzugeben, die einfach im Aufbau ist und trotzdem bei Fehlbedienungen gewährleistet, daß eine Überhitzung des Motors aufgrund zu hoher Kühlmitteltemperatur ausgeschlossen ist. Des weiteren wird eine optimale Ausnutzung der Kühlleistung des Kühlsystems angestrebt.

Erfindungsgemäß wird dieses Problem durch ein Verfahren mit den Merkmalen des Anspruches 1 sowie durch ein Steuer-/Regelsystem gemäß den Merkmalen des Anspruches 5 gelöst.

Das erfindungsgemäße Verfahren zeichnet sich dadurch aus, daß zumSchutz des Kühlsystems vor Überhitzung bei gleichzeitiger maximaler Ausnutzung der Kühlleistung des Kühlsystems zur Begrenzung des Bremsmomentes oder der Bremsleistung des Sekundärretarders mindestens eine der nachfolgenden Größen bestimmt wird: der Kupplungszustand des Getriebes oder der Leergangstellung des Getriebes.

In einer ersten Ausführungsform der Erfindung ist vorgesehen, daß das Bremsmoment bzw. die Bremsleistung des Sekundärretarders mindestens als Funktion des Kupplungszustandes eingestellt wird.

In einer besonders einfachen Ausführungsform in bezug auf die bauliche Ausgestaltung wird das Retarderbremsmoment nur aufgrund des Kupplungszustandes begrenzt. So kann im ausgekuppelten Zustand, in dem der Sekundärretarder ein hohes Bremsmoment und damit eine hohe Bremsleistung entwickeln kann, aufgrund der niedrigen Wasserpumpendrehzahl in diesem Betriebszustand aber die Kühlleistung des Kühlsystems nur sehr gering ist, ein Überhitzen des Kühlmediums dadurch verhindert werden, daß das Bremsmoment auf einen fest vorgegebenen Wert begrenzt wird. Aufgrund der Proportionalität

$$P \sim M_{Ret} \cdot n_{Ret}$$

sind Bremsmoment und Bremsleistung miteinander verknüpft. Statt einer Begrenzung auf ein fest vorgegebenes Bremsmoment ist es daher auch möglich, eine Begrenzung auf eine fest vorgegebene Bremsleistung vorzunehmen. Die Bremsleistung, bei der die Begrenzung einsetzt, kann derart gewählt werden, daß sie genau der bei Leerlaufdrehzahl der Wasserpumpe im Kühlkreislauf zur Verfügung stehenden Kühlleistung entspricht.

Würde im ausgekuppelten Zustand die Retarderdrehzahl absinken, so könnte bei Regelung auf ein- und dieselbe Bremsleistung ein höheres Bremsmoment angelegt werden, das zulässige Bremsmoment würde erhöht. Umgekehrt muß das Bremsmoment zurückgenommen werden, wenn die Retarderdrehzahl steigt.

In einer weitergebildeten Variante der Erfindung kann vorgesehen sein, nicht nur den Kupplungszustand zu erfassen sondern auch die Leergangstellung des Getriebes, und die Bremsleistung als Funktion der Leergangstellung einzustellen. Dies ist insbesondere deswegen wichtig, weil im Leergang derselbe Zustand wie bei niedergedrückter Kupplung vorliegt. Dies aber bedeutet, daß im Leergang aufgrund der niedrigen Wasserpumpendrehzahl vom Kühlsystem nur eine sehr geringe Kühlleistung zur Verfügung gestellt wird, mit der die während des Bremsvorganges anfallende Wärme abgeführt werden kann. Um eine Schädigung im Kühlsystem zu verhindern, muß daher das Bremsmoment bzw. die Bremsleistung des Retarders, im Falle das Leergangsignal anliegt, gegenüber den übrigen Betriebszuständen sehr stark begrenzt werden.

Wie zuvor erwähnt, erfolgt bei einer Begrenzung der Retarderbremsleistung dies im allgemeinen dadurch, daß das Bremsmoment in Abhängigkeit von der aktuellen Retarderdrehzahl eingestellt wird.

Neben dem Verfahren stellt die Erfindung auch eine Regel-/Steuervorrichtung zur Begrenzung der maximal ausnutzbaren Bremswirkung eines Sekundärretarders zur Verfügung. Eine derartige Regel-/Steuervorrichtung umfaßt mindestens ein Mittel zur Erfassung mindestens einer der nachfolgenden Größen: des Kupplungszustandes oder des Leergangzustandes. Daneben weist die erfindungsgemäße Regel-/Steuervorrichtung eine Steuer-/Regeleinheit auf, die den Retarder derart ansteuert, daß er in Abhängigkeit von mindestens einer der erfaßten Größen, wie Kupplungszustand, Leergangstellung, das Retarderbremsmoment bzw. die Retarderbremsleistung einstellt.

Wie zuvor bereits ausgeführt, ist es vorteilhaft, wenn die Einstellung einer vorgegebenen Retarderbremsleistung dadurch erfolgt, daß bei vorgegebener Retarderdrehzahl ein bestimmtes Retarderbremsmoment eingestellt wird.

Während die Steuer-/Regeleinrichtung bei jeder Art von Retardern, beispielsweise auch bei elektrischen Retardern, wie sie aus der Druckschrift "Fahrzeugkomponenten (Retarder) - Mehr Sicherheit und fahrgastfreundlich in: bus-magazin, Heft 8, August 1993, S. 36-39" oder DE 29 609 311 U1, deren Offenbarungsgehalt vollumfänglich in dieser Anmeldung mit einbezogen wird, bekanntgeworden sind, Anwendung finden kann, liegt ein besonders bevorzugter Anwendungsbereich auf dem Gebiet der hydrodynamischen Retarder. In einer besonderen Ausführungsform schlägt die Erfindung bei hydrodynamischen Retardern vor, daß bei diesen die Mittel zur Einstellung des Retarderbremsmomentes Mittel zur Einstellung des hydrodynamischen Druckes im Retarder umfassen.

Die Erfindung soll anhand der nachfolgenden Figuren beispielhaft beschrieben werden.

Es zeigen:

Fig. 1 ein Antriebsstrang mit der erfindungsgemäßen Steuer-/Regelvorrichtung;

Fig. 2A und 2B zeitlicher Bremsmomentenverlauf in unterschiedlichen Betriebszuständen;

Fig. 3 zeitlicher Bremsmomentenverlauf bei Begrenzung auf eine vorgegebene Bremsleistung.

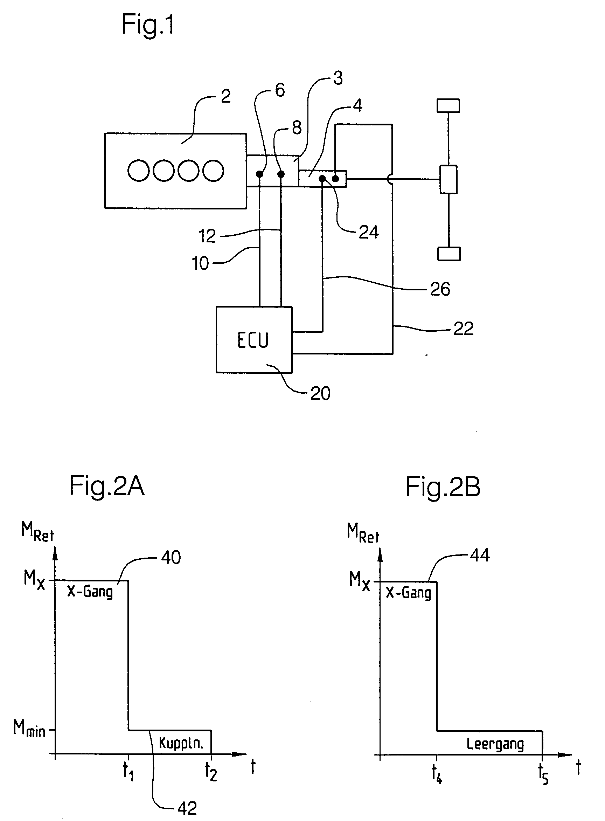

In Figur 1 ist ein Antriebsstrang mit einem Sekundärretarder und der erfindungsgemäßen Steuer-/Regeleinrichtung dargestellt. Der Antriebsstrang umfaßt einen Motor 2. An den Motor 2 schließt sich ein Getriebe 3 an, an dem ein Sekundärretarder 4 angebracht ist. Das Getriebe 3 und die Kupplung umfassen Mittel 6,8 zur Erkennung des Kupplungszustandes sowie der Leergangstellung. Das Kupplungszustandssignal wird über Leitung 10 an die Steuer-/Regeleinheit 20 übermittelt, das Leergangstellungssignal über Leitung 12.

Liegt an der ECU bzw. der Steuer-/Regeleinrichtung 20 entweder auf Leitung 10 das Signal "Kupplung gedrückt" oder auf Leitung 12 das Signal "Leergang eingelegt" an, so wird von der ECU das Bremsmoment des Retarders durch Ansteuerung derselben über Leitung 22 in einer ersten Variante auf einen vorbestimmten Wert $M_{min}$ reduziert, und zwar unabhängig vom gewählten Bremsprogramm. Dabei ist der Wert $M_{min}$, den die Steuereinheit vorgibt, derart gewählt, daß selbst bei der größtmöglichen Retarderdrehzahl die abzuführende Bremsleistung die vom Kühlsystem bei Leerlaufdrehzahl der Wasserpumpe zur Verfügung gestellte Kühlleistung nicht überschreitet. Eine Überhitzung ist dann ausgeschlossen. Die Einstellung des Bremsmomentes am Retarder selbst kann auf bekannte Art und Weise, beispielsweise mit Hilfe eines Proportionalventils oder eines Drosselventils erfolgen. In diesem Zusammenhang wird auf die DE-A-44 08 349 verwiesen, deren Offenbarungsgehalt vollumfänglich in diese Anmeldung mitaufgenommen wird.

In einer weitergebildeten Ausführungsform kann vorgesehen sein, daß auf eine vorgegebene Bremsleistung bei anliegendem Leergang-/Kupplungssignal durch die ECU geregelt wird, die der Kühlleistung des Kühlsystems bei Leerlaufdrehzahl des Motors bzw. der Wasserpumpe entspricht. Hierzu wird die Drehzahl des Retarders beispielsweise über Sensor 24 aufgenommen und an die Steuer-/Regeleinrichtung 20, die vorliegend als sogenannte ECU (Electronic Control Unit) ausgebildet ist, übermittelt. Eine andere Alternative der Bestimmung der Drehzahl besteht in der Rückrechnung des Drehzahlsignales aus anderen Signalen, beispielsweise dem Tachosignal.

In Figur 2A und 2B ist der zeitliche Verlauf des Retarderbremsmomentes in unterschiedlichen Betriebszuständen gezeigt, wenn die erfindungsgemäße Steuerung bzw. Regelung das Retarderbremsmoment auf ein vorgegebenes Retarderbremsmoment begrenzt.

In der ersten Phase 40 der Figur 2A, d.h. in der Zeit 0 < t < t1, ist ein Fahrgang, beispielsweise der x.-Gang eingelegt, der eine hohe Motordrehzahl ergibt. In diesem Fall ist auch die Wasserpumpendrehzahl sehr hoch, mithin auch die zur Verfügung stehende Kühlleistung des Kühlsystems. Das dargestellte Retarderbremsmoment entspricht einem durch Betriebsprogramm ausgewählten Bremsmoment $M_x$. Nach einer gewissen Zeit t1 tritt der Fahrer nun bei eingelegter Retarderbremsstufe die Kupplung. Während die Kupplung niedergedrückt ist, was im Zeitabschnitt zwischen t1 und t2 der Fall und mit Bezugsziffer 42 bezeichnet ist, wird das Retarderbremsmoment auf den Wert $M_{min}$ reduziert, um eine Überhitzung im Kühlsystem zu verhindern, da in diesem Zeitabschnitt die Drehzahl der Wasserpumpe und somit die Kühlleistung des Kühlsystems nur sehr gering ist.

In Fig. 2B ist ein Betriebszustand mit Leergang-Einlegung gezeigt. Wie in Fig. 2A ist in der Anfangsphase in vorliegendem Beispiel ein Fahrgang, beispielsweise der x.-Gang eingelegt, der wiederum eine hohe Motordrehzahl aufgrund der aktuellen Fahrgeschwindigkeit ergibt. Wird nun in den Leergang geschaltet (t4 < t < t5), so wird aufgrund der niedrigen Wasserpumpendrehzahl und damit der geringen Kühlleistung des Kühlsystems wird das Retarderbremsmoment auf den Wert $M_{min}$, identisch mit dem Wert für den ausgekuppelten Betriebszustand ist, reduziert. Die Reduzierung kann gegebenenfalls in den Fig. 2A und 2B auch zeitabhängig gesteuert erfolgen.

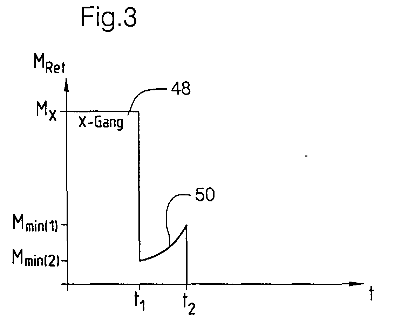

In Figur 3 ist der zeitliche Verlauf des Retarderbremsmomentes in unterschiedlichen Betriebszuständen gezeigt, wenn die erfindungsgemäße Steuerung bzw. Regelung das Retarderbremsmoment auf eine vorgegebene Retarderbremsleistung begrenzt. In einer ersten Phase 48 (0 < t < t1) soll ein Fahrgang, beispielsweise der x.-Gang eingelegt sein, der aufgrund der aktuellen Fahrgeschwindigkeit eine hohe Motordrehzahl ergibt. In diesem Fall ist, wie schon in Figur 2, die Wasserpumpendrehzahl sehr hoch, mithin auch die zur Verfügung stehende Kühlleistung des Kühlsystems. Das dargestellte Retarderbremsmoment entspricht einem durch Betriebsprogramm ausgewählten Bremsmoment $M_x$. Nach einer gewissen Zeit t1 tritt der Fahrer nun bei eingelegter Retarderbremsstufe die Kupplung bzw. schaltet in den Leergang. Dieser Zeitabschnitt ist mit Bezugsziffer 50 dargestellt. Im Gegensatz zur Ausführungsform gemäß Figur 2 ist nunmehr das Bremsmoment keine konstante Größe mehr, sondern ändert sich im zeitlichen Verlauf, und zwar abhängig von der Retarderdrehzahl. In dem vorliegenden Beispiel der Bremsung in der Ebene nimmt die Fahrzeuggeschwindigkeit aufgrund der Eigenverzögerung und der Retarderbremsung des Fahrzeuges ab. Dies wiederum hat bei einem Sekundärretarder zur Folge, daß die Drehzahl abnimmt, mithin also das Bremsmoment erhöht werden kann, ohne daß die vorgegebene Bremsleistung z.B. $P_{min}$ überschritten wird. In dem in Figur 3 dargestellten günstigen Fall nimmt also das vom Retarder zur Verfügung gestellte Bremsmoment aufgrund der Bremsung des Fahrzeuges ständig zu. Dies ermöglicht eine bessere Ausnutzung des Retarders.

Eine Abnahme wäre für den Fall denkbar, bei dem die Fahrzeuggeschwindigkeit im ausgekuppelten bzw. im Leergang-Zustand zunimmt (z.B. Bergabfahrt). Hierdurch nimmt auch die Retarderdrehzahl zu, was aber wiederum bedeutet, daß das Retarderbremsmoment abgesenkt werden muß, wenn die vorgegebene Retarderbremsleistung nicht überschritten werden soll.

Mit der vorliegenden Erfindung wurde somit erstmals ein Verfahren und eine Vorrichtung zur Begrenzung der maximal ausnutzbaren Bremswirkung eines Sekundärretarders vorgestellt, bei dem eine Überhitzung des Kühlmediums und damit eine Schädigung von Motor oder Retarder auf einfache Art und Weise ausgeschlossen werden kann.

## Patentansprüche

1. Verfahren zur Begrenzung der maximal ausnutzbaren Bremswirkung eines Sekundärretarders, bei dem die während des Bremsens erzeugte Wärme mit Hilfe eines Kühlmediums eines Kühlsystems abgeführt wird, das Verfahren ist dadurch gekennzeichnet, daß zum Schutz des Kühlsystems vor Überhitzung bei gleichzeitiger maximaler Ausnutzung der Kühlleistung des Kühlsystems zur Begrenzung der Bremsleistung oder des Bremsmomentes des Sekundärretarders mindestens eine der nachfolgenden Größen bestimmt wird:

    der Kupplungszustand des Getriebes;
    die Leergangstellung des Getriebes.

2. Verfahren nach Anspruch 1, dadurch gekennzeichnet, daß das Bremsmoment oder die Bremsleistung mindestens als Funktion des Kupplungszustandes eingestellt bzw. begrenzt wird.

3. Verfahren nach einem der Ansprüche 1 oder 2, dadurch gekennzeichnet, daß das Bremsmoment oder die Bremsleistung mindestens als Funktion der Leergangstellung eingestellt bzw. begrenzt wird.

4. Verfahren nach einem der Ansprüche 1 bis 3, dadurch gekennzeichnet, daß das Bremsmoment des Retarders in Abhängigkeit von Retarderdrehzahl und Bremsleistung eingestellt bzw. begrenzt wird.

5. Regel-/Steuersystem mit Mitteln zur Erfassung mindestens einer der nachfolgenden Größen:

    des Kupplungszustandes;
    der Leergangstellung
    sowie eine Steuer-/Regeleinheit, die den Retarder derart ansteuert, daß in Abhängigkeit von mindestens einer der oben genannten Größen das Retarderbremsmoment oder die Retarderbremsleistung eingestellt bzw. begrenzt wird um das Kühlsystem vor Überhitzung zu schützen und gleichzeitig die Kühlleistung des Kühlsystems optimal auszunutzen.

6. System nach Anspruch 5, dadurch gekennzeichnet, daß dieses des weiteren umfaßt:

    Mittel zur Erfassung der Retarderdrehzahl, Mittel zur Einstellung des Retarderbremsmomentes in Abhängigkeit von Retarderbremsleistung und Retarderdrehzahl.

7. System nach einem der Ansprüche 5 bis 6, dadurch gekennzeichnet, daß der Retarder ein hydrodynamischer Retarder ist.

## Fig.1

## Fig.2A

## Fig.2B

Fig.3

Europäisches
Patentamt

**EUROPÄISCHER RECHERCHENBERICHT**

Nummer der Anmeldung

EP 98 10 6440

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 24 05 740 A (DAIMLER BENZ AG) 21.August 1975<br>* Seite 4, Zeile 3 - Zeile 31; Abbildung *<br>--- | 1-7 | B60T10/02 |
| X | EP 0 585 989 A (GEN MOTORS CORP) 9.März 1994<br>* Spalte 5, Zeile 27 - Zeile 57; Abbildungen *<br>--- | 1,2,4-7 | |
| A,D | WO 94 27845 A (SCANIA CV AB) 8.Dezember 1994<br>* Seite 4, Zeile 16 - Seite 5, Zeile 28; Abbildungen *<br>--- | 1,5 | |
| A | WO 95 01500 A (SCANIA CV AB) 12.Januar 1995<br>* Seite 1, Zeile 22 - Zeile 32; Anspruch 1; Abbildungen *<br>--- | 1 | |
| A,D | DE 26 52 650 A (DAIMLER BENZ AG) 24.Mai 1978<br>--- | | **RECHERCHIERTE SACHGEBIETE (Int.Cl.6)** |
| A,D | DE 33 21 948 A (RENK AG ZAHNRAEDER) 3.Januar 1985<br>----- | | B60T |

Der vorliegende Recherchenbericht wurde für alle Patentansprüche erstellt

| Recherchenort | Abschlußdatum der Recherche | Prüfer |
|---|---|---|
| DEN HAAG | 18.Juni 1998 | Szamocki, G |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
   Dokument

EPO FORM 1503 03 82 (P04C03)